# EUROPEAN PATENT SPECIFICATION

(11) **EP 2 667 076 B1**
(45) Date of publication and mention of the grant of the patent: **19.04.2017**
(21) Application number: 12845163.0
(22) Date of filing: 29.10.2012
(51) Int. Cl.: H01M 2/10, H01M 10/625, H01M 10/653, H01M 10/663, H01M 10/6571, H01M 10/6551, H01M 10/6567, H01M 10/6554, H01M 10/658, H01M 10/627

(54) **SECONDARY BATTERY UNIT**
SEKUNDÄRBATTERIEEINHEIT
UNITÉ DE BATTERIE SECONDAIRE

(30) Priority: 31.10.2011 JP 2011238556; 04.07.2012 JP 2012150424
(43) Date of publication of application: 27.11.2013
(73) Proprietor: Panasonic Intellectual Property Management Co., Ltd., Osaka-shi, Osaka 540-6207 (JP)
(72) Inventor: MIYAKAWA, Hidenori, Osaka 540-6207 (JP); ONO, Masahiro, Osaka 540-6207 (JP); NOMURA, Tsuyoshi, Osaka 540-6207 (JP)
(74) Representative: Schwabe - Sandmair - Marx
(86) International application number: PCT/JP2012/006927
(87) International publication number: WO 2013/065285

(56) References cited:
- CA-A1- 2 057 800
- JP-A- H08 501 655
- JP-A- S61 110 972
- JP-A- 2001 223 035
- JP-A- 2002 093 470
- JP-A- 2006 093 155
- JP-A- 2009 111 003
- JP-U- H04 124 803
- US-A- 5 281 792
- US-A1- 2004 135 550
- US-B1- 6 651 446

## Description

### Technical Field

The present invention relates to a heat source unit containing a secondary battery unit and a heat source according to the preamble of claim 1, wherein the secondary battery unit is provided with a heat insulation member for the secondary battery for cutting off heat transfer from the external heat source to the secondary battery as the internal heat source.

### Background Art

A secondary battery is used in various fields. On the other hand, the secondary battery has some problems. First, the secondary battery generates heat during an operation. Heat generation of the secondary battery reduces the performance of the secondary battery. Further, in the secondary battery, deterioration is accelerated by an increase in environmental temperature.

For example, in a case where the secondary battery is used in an idling stop mechanism in an automobile, the secondary battery is usually installed in an engine room. However, in such a high-temperature environment, deterioration of the secondary battery is easily accelerated. For this reason, in a case where the secondary battery is used in the above-described use, it is important to establish a structure that cuts off heat transfer from an engine to the secondary battery and that releases heat that is generated in the secondary battery to the outside.

As a technique to cut off the heat from an external heat source, for example, a composite heat insulation body which is configured of a heat insulation member and a graphite sheet bonded to the heat insulation member is known. The composite heat insulation body can be used in electronic equipment having an electronic component that is accompanied by heat generation and a metallic casing that accommodates the electronic component. The composite heat insulation body is used with the heat insulation member disposed to be spaced apart from the electronic component and with the graphite sheet bonded to the inner surface of the casing (refer to PTL 1, for example).

On the other hand, the secondary battery can be quickly started up by moderately warning it at the time of starting-up. As a technique to heat the secondary battery at the time of starting-up, for example, a heat insulation unit having a heat insulation member and a sheet-like heat generation body bonded to the heat insulation member is known. The heat insulation unit is used in a secondary battery case made of metal or in an assembled battery. The heat insulation unit is disposed such that the heat generation body comes into close contact with the case or the assembled battery and that the heat insulation member covers the heat generation body (refer to PTLs 2 and 3, for example).

Further, in PTL 4, an apparatus for keeping a car-mounted storage battery warm at an appropriate temperature is disclosed. However, in PTL 4, a technique to cut off heat from an external heat source to the car-mounted storage battery is not suggested.

US 6,651,446 B1 discloses a heat supply from thermoelectric modules located together with a battery compartment in an outdoor electrical equipment cabinet. This prior art document reveals the features according to the preamble of claim 1.

JP 2002-093470 A discloses a battery pack unifying the battery temperature of a plurality of batteries stored in a pack case and improving the heat radiating property of the batteries.

### Citation List

### Patent Literature

PTL 1 : Japanese Patent Application Laid-Open No. 2009-111003
PTL 2: Japanese Patent Application Laid-Open No. 2011-165390
PTL 3: Japanese Patent Application Laid-Open No. 2011-165391
PTL 4: Japanese Utility Model Registration Application Laid-Open No. HEI4-124803

### Summary of Invention

### Technical Problem

However, in the prior art, it is not possible to realize both the cutoff of heat from an external heat source to the secondary battery as an internal heat source and the release of the heat from the secondary battery. Further, in the prior art, it is difficult to cause the starting-up of the secondary battery quickly. In order to solve the above-described problems, the first object of the present invention is to provide a secondary battery unit that is provided with a heat insulation member which realizes both the cutoff of heat from an external heat source to a secondary battery as an internal heat source and the release of the heat from the secondary battery. The second object of the present invention is to provide a secondary battery unit that is provided with a heat insulation member in which it is possible to cause the starting-up of the secondary battery quickly.

### Solution to Problem

According to the invention, there is provided a heat source unit including the features listed up in
claim 1. Advantageous embodiments are defined in the sub-claims.

### Advantageous Effects of Invention

According to the invention, it is possible to attain both the cutoff of heat from an external heat source to the secondary battery as an internal heat source and the release of heat from the secondary battery. Further, according to the invention, the heating device that can heat the secondary battery through the heat transfer material layer is provided, whereby it is possible to start-up the secondary battery quickly.

### Brief Description of Drawings

FIG. 1 is a conceptual diagram of a secondary battery unit that is provided with a heat insulation member for a secondary battery according to an embodiment;
FIG. 2 is a conceptual diagram of a secondary battery unit that is provided with a heat insulation member for a secondary battery according to a modified example of the embodiment;
FIG. 3 is a diagram showing a heat insulation member according to Reference Example 1;
FIG. 4 is a diagram showing a state where the heat insulation member of FIG. 3 disposed at secondary battery 3 is viewed along an axial direction of secondary battery 3;
FIG. 5 is a diagram showing a state where the heat insulation member of FIG. 3 disposed at secondary battery 3 is viewed from the side of secondary battery 3;
FIG. 6 is a diagram showing a heat insulation member according to Reference Example 2;
FIG. 7 is a diagram showing a main section of a cross section when the heat insulation member of FIG. 6 is cut along line A - A;
FIG. 8 is a diagram showing a state where the heat insulation member of FIG. 6 disposed at secondary battery 3 is viewed along an axial direction of secondary battery 3;
FIG. 9 is a diagram showing a heat insulation member according to Reference Example 3;
FIG. 10 is a diagram showing a main section of a cross section when the heat insulation member of FIG. 9 is cut along line A - A;
FIG. 11 is a diagram showing a main section of a cross section when secondary battery 3 and the heat insulation member of FIG. 9 in a state of being disposed at secondary battery 3 are cut along line A - A;
FIG. 12 is a diagram showing a state when a heat insulation member disposed at secondary battery 3, according to Example 4 for Explanatory Purposes, is viewed along an axial direction of secondary battery 3;
FIG. 13 is a diagram showing a state where the heat insulation member of FIG. 12 disposed at secondary battery 3 is viewed from the external heat source side; and
FIG. 14 is a diagram showing a state when a heat insulation member disposed at secondary battery 3, according to Reference Example 5, is viewed from the side of secondary battery 3.

### Description of Embodiments

Hereinafter, description of the invention will be made using an embodiment. However, the invention is not limited to the following embodiment.

### [Secondary Battery Unit (Heat Insulation Member for Secondary Battery)]

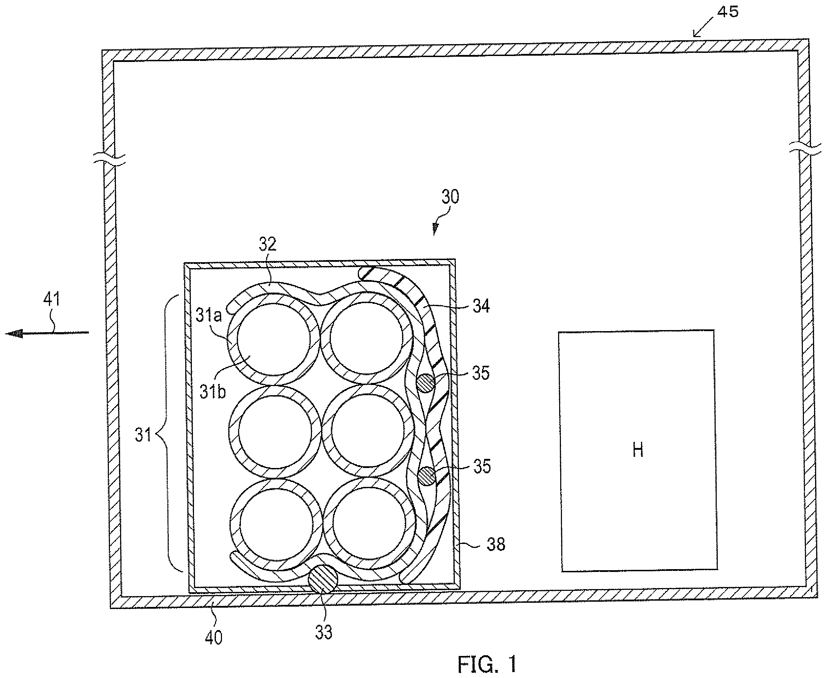

FIG. 1 is a conceptual diagram of secondary battery unit 30 that is provided with a heat insulation member for a secondary battery according to an embodiment and that is disposed in heat source unit 45 having external heat source H therein. Here, description will be made taking as an example car-mounted secondary battery unit 30 in which external heat source H is an engine and heat source unit 45 is a car.

Secondary battery unit 30 has: secondary battery 31 as an internal heat source; rectangular sheet-like heat transfer material layer 32 disposed so as to come into contact with the outer periphery of secondary battery 31; heating device 35 that is arranged on secondary battery 31 with heat transfer material layer 32 being therebetween, heating device 35 being configured to heat secondary battery 31; sheet-like heat insulation material layer 34 that is arranged at the outer peripheries of heat transfer material layer 32 and heating device 35 so as to face heat source (hereinafter also referred to as an "external heat source") H of heat source unit 45, the layer 34 having lower thermal conductivity than heat transfer material layer 32 and heating device 35 so as to face heat source (hereinafter also referred to as an "external heat source") H of heat source unit 45, the layer 34 having lower thermal conductivity than heat transfer material layer 32 and having a shorter length than heat transfer material layer 32; and heat dissipation section 33 contacting heat transfer material layer 32 and external heat dissipation section (a car body) 40 of heat source unit 45, the section 33 releasing the heat of secondary battery 31 to the outside of heat source unit 45.

It is preferable that heat insulation material layer 34 be absent between heat dissipation section 33 and external heat dissipation section 40. This is for enhancing a heat dissipation effect. Further, it is preferable that heat dissipation section 33 and external heat dissipation section 40 be respectively formed of separate members. In a case where heat dissipation section 33 and external heat dissipation section 40 are configured as one member, it becomes difficult to mount and dismount secondary battery unit 30 on and from heat source unit 45. On the other hand, by taking a configuration as in the embodiment, it becomes possible to configure secondary battery unit 30 so as to be able to be mounted on and dismounted from heat source unit 45.

Secondary battery 31 is configured of a plurality of cylindrical battery cases 31a joined or bonded to each other, and a plurality of cylindrical secondary battery cells 31b respectively accommodated in battery cases 31a. Secondary battery 31 may further have an insulating layer that covers an inner peripheral wall of battery case 31a. Here, each member of secondary battery unit 30 is accommodated in case 38. Heat dissipation section 33 contacts external heat dissipation section 40 through a cutout portion of case 38.

In this manner, the heat insulation member for a secondary battery has: rectangular sheet-like heat transfer material layer 32 arranged so as to be disposed at the outer periphery of secondary battery 31; heating device 35 that is arranged on secondary battery 31 with heat transfer material layer 32 being interposed therebetween, heating device 35 being configured to heat secondary battery 31; heat dissipation section 33 disposed contacting heat transfer material layer 32 and external heat dissipation section 40, heat dissipation section 33 releasing the heat of secondary battery 31 to the outside; and rectangular sheet-like heat insulation material layer 34 that is arranged at an outer periphery of heat transfer material layer 32 so as to prevent a heat transfer from external heat source H to secondary battery 31, the outer periphery facing the external heat source H. Heat insulation material layer 34 is shorter than the heat transfer material layer 32.

It is preferable that heat transfer material layer 32 have a heat transfer property to transmit heat generated in secondary battery 31 as the internal heat source to heat dissipation section 33. From the viewpoint of such a heat transfer property, usually, it is preferable that the thermal conductivity of heat transfer material layer 32 be greater than or equal to 1.5 W/(m·k), it is more preferable that the thermal conductivity be greater than or equal to 3 W/(m·k), and it is further preferable that the thermal conductivity be greater than or equal to 10 W/(m·k).

From the viewpoint of a close-contact property with the surface of secondary battery 31, it is preferable that the thickness of heat transfer material layer 32 be in a range of 0.025 mm to 10 mm, it is more preferable that the thickness be in a range of 0.025 mm to 5 mm, and it is further preferable that the thickness be in a range of 0.025 mm to 3 mm.

It is preferable that heat transfer material layer 32 be disposed in close contact with at least a portion of the surface of secondary battery 31. This is because it becomes easy for heat transmitted from secondary battery 31 to heat transfer material layer 32 to be released to the outside of heat source unit 45 through heat dissipation section 33. Further, it is preferable that heat transfer material layer 32 be disposed on a part of the surface of secondary battery 31, the part facing external heat source H. In this manner, heat transfer material layer 32 is arranged at a portion where heat insulation material layer 34 is disposed, whereby a cooling effect on secondary battery 31 increases. Here, the "surface facing external heat source H, of the surface of secondary battery 31" refers to the surface of secondary battery 31 which is shown in a projection view of secondary battery 31 when viewed from the external heat source H side. In addition, as long as heat transfer material layer 32 closely contacts the surface of secondary battery 31, heat transfer material layer 32 may be a single layer and may also be two or more layers.

From the viewpoint of releasing a sufficient amount of heat from secondary battery 31, it is preferable that heat transfer material layer 32 closely contact an area in a range of 10% to 100% of a projection surface of secondary battery 31 when viewed from the external heat source H side, it is more preferable that heat transfer material layer 32 closely contact an area in a range of 30% to 100% of the projection surface, and it is further preferable that heat transfer material layer 32 closely contact with an area in a range of 50% to 100% of the projection surface. It is preferable that heat transfer material layer 32 cover the side surface of secondary battery 31. Further, heat transfer material layer 32 may cover the bottom surface as well as the side surface of secondary battery 31. In addition, in a case where heat transfer material layer 32 is disposed on the bottom surface of secondary battery 31, heat dissipation section 33 may be disposed on the bottom side of secondary battery 31.

Heat transfer material layer 32 may be formed on the surface of heat insulation material layer 34 which is contoured to fit secondary battery 31. Further, heat transfer material layer 32 may also be a film-like member having flexibility that closely contacts the surface facing external heat source H, of secondary battery 31. Above all, heat transfer material layer 32 having flexibility can be more easily manufactured and it is possible to allow heat transfer material layer 32 to closely contact the surfaces of secondary batteries 31 having various shapes. For this reason, heat transfer material layer 32 having flexibility is preferable from the viewpoint of a wide use of the heat insulation member according to the invention.

Heat transfer material layer 32 may be directly formed on the predetermined surface of heat insulation material layer 34 by vapor-depositing, plating, thermally spraying, or by applying a material of heat transfer material layer 32. Further, heat transfer material layer 32 may also be formed by bonding a heat transfer material having a predetermined form (such as a film form and a thin-sheet form) to the predetermined surface of heat insulation material layer 34 by an adhesive.

Heat transfer material layer 32 may also have an additional characteristic according to the internal heat source. For example, in a case where the internal heat source has electric conductivity such as secondary battery 31, it is preferable that heat transfer material layer 32 have insulation properties. More specifically, from the viewpoint of prevention of a short circuit in the heat insulation member, it is preferable that the electric conductivity of heat transfer material layer 32 be less than or equal to 20 mS/cm, it is more preferable that the electric conductivity be less than or equal to 3 mS/cm, and it is further preferable that the electric conductivity be less than or equal to 0.5 mS/cm.

At least one surface among surfaces of heat transfer material layer 32 can be adjusted, the one surface closely contacting secondary battery 31. The adjustment of the electric conductivity of heat transfer material layer 32 can be performed by forming an insulating layer at least on the one surface closely contacting secondary battery 31, among the surfaces of heat transfer material layer 32. The formation of the insulating layer can be performed by forming a layer of a known insulating material on the surface of heat transfer material layer 32 by a known method. Further, it is also possible to purchase film-like heat transfer material layer 32 having insulation property as a commercial product.

Examples of material of heat transfer material layer 32 directly formed on the surface of heat insulation material layer 34 comprise: a dispersion body comprising thermosetting resin such as epoxy resin and ceramic powders having high thermal conductivity dispersed in the thermosetting resin at high concentration (for example, a range from 70% by mass to 9% by mass), the ceramic powders can be alumina; and a metal layer.

Examples of material of heat transfer material layer 32 which is bonded to the surface of heat insulation material layer 34 comprises: a graphite sheet; metal foil; a metal filler; and a resin molded body that contains ceramic powder having high thermal conductivity, such as alumina. As a metal material of the metal foil or the metal filler, for example, nickel or copper can be given.

From the viewpoint of obtaining flexibility and excellent heat dissipation properties of secondary battery 31, it is preferable that heat transfer material layer 32 be a graphite sheet. Above all, crystalline graphite is preferable because of its excellent thermal conductivity and flexibility. Among crystalline graphite, a graphite sheet manufactured by a polymer graphitization method can be preferable. It is preferable that at least one of heat insulation material layer 34 and heat transfer material layer 32 have flexibility.

Heat dissipation section 33 is for releasing the heat of secondary battery 31 transmitted to heat transfer material layer 32 to the outside through external heat dissipation section 40 of heat source unit 45. It is preferable that heat dissipation section 33 be arranged on secondary battery 31 with heat transfer material layer 32 being interposed therebetween, and further, it is preferable that heat dissipation section 33 be in contact with external heat dissipation section 40. This is for efficiently releasing heat generated in secondary battery 31 to the outside of heat source unit 45. As shown in FIG. 1, heat dissipation section 33 contacts a car body as external heat dissipation section 40, whereby, when a car advances in a direction of arrow 41, the car body is subjected to wind, and thus it is possible to dissipate heat generated in secondary battery 31 to the outside of the car body.

It is preferable that heat dissipation section 33 be disposed so as not to be exposed to the heat from external heat source H. This is for preventing the cooling effect of heat dissipation section 33 from being impaired. In addition, a part of heat dissipation section 33 may be in direct contact with secondary battery 31.

Heat dissipation section 33 can be formed of a metal material having high thermal conductivity. It is preferable that the thermal conductivity of heat dissipation section 33 be greater than or equal to 1.5 W/(m·K), it is more preferable that the thermal conductivity be greater than or equal to 3 W/(m·K), and it is further preferable that the thermal conductivity be greater than or equal to 10 W/(m·K). Specifically, heat dissipation section 33 can be formed of aluminum or the like. Further, a portion of heat dissipation section 33 may be covered by a heat insulation seal, as necessary. For example, in a case where heat dissipation section 33 passes through an area which is exposed to the heat from external heat source H, heat dissipation section 33 in the area can be covered by a heat insulation seal.

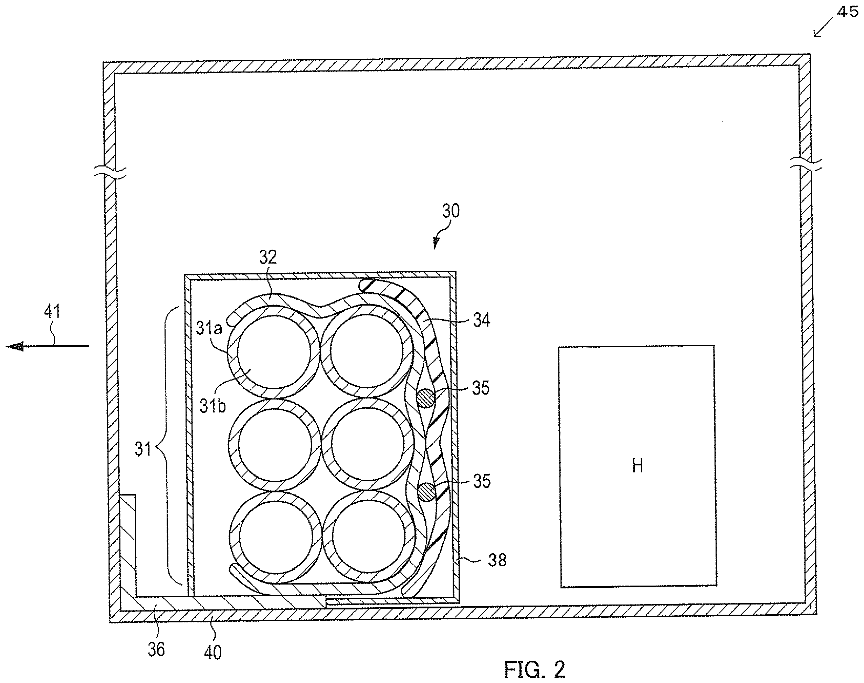

It is preferable the shape of heat dissipation section 33 is a columnar shape as shown in FIG. 1. This is because it is possible to increase a contact area with heat transfer material layer 32, and also it is easy for heat dissipation section 33 to contact external heat dissipation section 40. Further, as shown in FIG. 2, approximately L-shaped heat dissipation section 36 can be arranged at a left corner in the drawing of rectangular heat source unit 45 so as to contact the side of a car body (a long side in the drawing) as well as the front of a car body in a traveling direction (a short side in the drawing), thereby heat dissipation section 36 contacts external heat dissipation section 40. The contact area with external heat dissipation section 40 increases, whereby the heat dissipation effect is enhanced. Further, heat dissipation section 36 is disposed at the front portion in the traveling direction (which is shown by arrow 41) of external heat dissipation section 40, whereby the heat dissipation effect at the time of an advance of the car body is enhanced. It is preferable heat dissipation section 33 comprises a water-cooled tube.

Heat insulation material layer 34 is provided for shielding of heat from external heat source H to secondary battery 31. It is preferable that heat insulation material layer 34 be disposed at least at the outer periphery on the external heat source H side of heat transfer material layer 32, in order to secure the shielding effect. In this case, it is preferable to dispose heat insulation material layer 34 so as to be absent between heat dissipation section 33 and external heat dissipation section 40 in order to secure contact of heat dissipation section 33 with external heat dissipation section 40, thereby enabling release of heat to the outside of heat source unit 45.

Further, heat insulation material layer 34 may be disposed at the entire outer periphery of secondary battery 31 except for the contact point between heat dissipation section 33 and external heat dissipation section 40. This is because, even in a case where the heat from external heat source H circumvents to reach a surface which does not face external heat source H, the heat can be prevented from being transmitted to secondary battery 31.

It is preferable that heat insulation material layer 34 have heat insulating properties to cut off the heat from external heat source H. From the viewpoint of such heat insulating properties, usually, it is preferable that the thermal conductivity of heat insulation material layer 34 be less than or equal to 0.020 W/(m·K), it is more preferable that the thermal conductivity be less than or equal to 0.015 W/(m·K), and it is further preferable that the thermal conductivity be less than or equal to 0.010 W/(m·K).

Heat insulation material layer 34 may be an undeformable member which is formed in a shape such that heat transfer material layer 32 closely contacts secondary battery 31. Heat insulation material layer 34 may also be a deformable member which allows heat transfer material layer 32 to closely contact the surface facing external heat source H, of secondary battery 31. Examples of the deformable heat insulation material layer 34 include a heat insulation material layer having flexibility and a heat insulation material layer having elasticity. Above all, the heat insulation material layer having flexibility can be manufactured more thinly and more easily, and can allow heat transfer material layer 32 to closely contact the surfaces of secondary batteries 31 having various shapes. A preferable example of the heat insulation material layer includes a sheet-like heat insulation material layer having flexibility.

From the viewpoint of allowing heat transfer material layer 32 to closely contact secondary batteries 31 having various shapes, it is preferable that the thickness of heat insulation material layer 34 be in a range from 0.1 mm to 10 mm, it is more preferable that the thickness be in a range from 0.1 mm to 5 mm, and it is further preferable that the thickness be in a range from 0.1 mm to 2 mm.

Examples of material of heat insulation material layer 34 comprise: a porous body made of an inorganic oxide; ceramic paper; glass wool; aerogel; a resin foam body such as urethane foam; polystyrene; perlite (pearlstone); foamed concrete; heat insulation clay; pine wood; and a gypsum board.

From the viewpoint of improvement of a heat insulation effect, it is preferable that heat insulation material layer 34 contain aerogel. Such heat insulation material layer 34 can be composed of a heat-resistance material to the heat from external heat source H, and an aerogel contained in the heat-resistant material. Such heat insulation material layer 34 can be obtained by dispersing aerogel powder in a binder such as binding resin to obtain dispersion liquid, immersing a heat-resistant material in the dispersion liquid, and performing drying. Alternatively, heat insulation material layer 34 can be obtained by forming a resin member having a desired form such as a sheet shape from the dispersion liquid.

Examples of the heat-resistant material comprise: various organic materials having an ignition point and a softening point higher than the temperature of the environment to which the external heat source is exposed; and the same material of heat insulation material layer 34.

It is preferable that heat insulation material layer 34 contain aerogel. Examples of the aerogel include silica aerogel, carbon aerogel, and alumina aerogel.

From the viewpoint of obtaining excellent heat insulation effect due to aerogel, it is preferable that the content of the aerogel in heat insulation material layer 34 be greater than or equal to 10% by volume, it is more preferable that the content be greater than or equal to 30% by volume, and it is further preferable that the content be greater than or equal to 50% by volume. It is preferable that the content of the aerogel in heat insulation material layer 34 be less than or equal to 90% by volume from an economic viewpoint or the viewpoint of reaching a peak of a heat insulating property improvement effect. In this way, heat insulation material layer 34 can comprise a material having moderate heat resistance in addition to aerogel.

Heat insulation material layer 34 containing aerogel is preferable from the viewpoint of formation of sheet-like heat insulation material layer 34 having flexibility. Such heat insulation material layer 34 can be obtained by making aerogel powder be contained in a sheet having moderate heat resistance. The sheet can be made of organic material or inorganic material having heat resistance. The sheet containing aerogel powder can be a heat-resistant sheet described in Japanese Patent Application Laid-Open No. 2010-167685, for example.

It is preferable that secondary battery unit 30 comprise heating device 35 which heats secondary battery 31. This is because, even in a case of being placed in, for example, a low-temperature state, by heating secondary battery 31 to an appropriate temperature before or at the time of starting-up of secondary battery 31, it is possible to assist in the starting-up. In this case, it is preferable that heating device 35 be disposed so as to arrange apart from the heat dissipation section 33. This is for preventing the heating effect of heating device 35 and the cooling effect of heat dissipation section 33 from canceling each other out.

Heating device 35 may be a device that heats any region of heat transfer material layer 32. It is preferable that heating device 35 be arranged on secondary battery 31 as the internal heat source, with heat transfer material layer 32 being interposed therebetween. This is because it is possible to quickly and efficiently perform temperature adjustment of the internal heat source. It is preferable heating device 35 is a device to have a heating surface area with flexibility. Examples of heating device 35 comprise a sheet heater, a cord heater, a cartridge heater, and a sheathed heater.

Example of external heat source H includes a device generating heat such as a motor, in addition to the above-mentioned engine.

Heat insulation member 34 can be used as a first use to cut off heat from external heat source H to secondary battery 31 as the internal heat source and to release the heat of secondary battery 31 to the outside. Further, in a case where a part of secondary battery 31 generates beat, heat insulation member 34 can evenly supply the heat from a portion of secondary battery 31 to the entirety of secondary battery 31 through heat transfer material layer 32, while cutting off heat from external heat source H to secondary battery 31. A second use for evenly supplying of heat from the part of secondary battery 31 to the entirety of secondary battery 31 is also included in the use of heat insulation member 34.

As described above, the invention has been described according to an embodiment. However, a statement and the drawings that form a portion of this disclosure should not be understood to be intended to limit the invention. Various alternative embodiments, examples, and operational techniques will be apparent to those skilled in the art from the disclosure.

In the embodiment, the invention has been described taking a heat insulation member for a car-mounted secondary battery as an example. However, the use of the invention is not limited to a car-mounted use, and for example, the heat insulation member can also be used for a household secondary battery. In this case, in order to easily release the heat of secondary battery 31 to the outside, it is preferable to provide a fan and apply wind to heat dissipation section 33.

In the embodiment, the invention has been described taking secondary battery 31 as an example of the internal heat source. However, the internal heat source can be other electronic equipment than secondary battery 3. The external heat source can be an internal-combustion engine disposed in the vicinity of the electronic equipment, or a heat dissipation member exposed to direct sunlight.

As other uses, the internal heat source can be an apparatus or a member which is exposed to the heat from the external heat source and which partially generates heat. For example, the internal heat source can be an indoor floor or ceiling. In this case, the external heat source can be an area under the floor or an attic.

The heat insulation member may have an additional constituent element as long as the effect of the invention is obtained. Example of such an additional constituent element comprises a configuration where the heat dissipation section absorbs heat from the external heat source. According to this configuration, it is possible to transmit the heat from the external heat source to the heat transfer material layer at a desired time. Accordingly, it is possible to use the heat from the external heat source for temperature adjustment for starting-up of the internal heat source.

### [Reference Example 1]

In addition, it is possible to implement the above-described embodiment or add various changes to the above-described embodiment, on the basis of reference examples described below or the like.

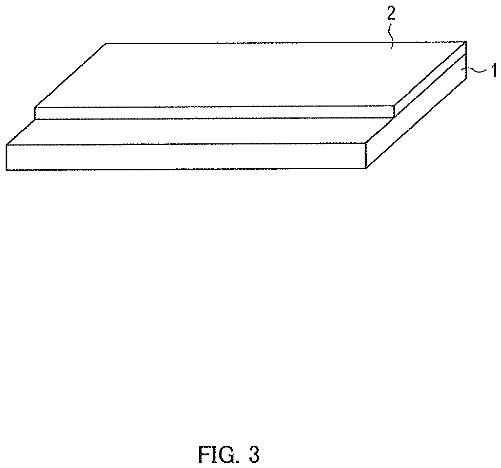

For example, a heat insulation member is shown in FIG. 3. The heat insulation member of FIG. 3 is configured of heat insulation material layer 1 and heat transfer material layer 2 arranged on heat insulation material layer 1. Both heat insulation material layer 1 and heat transfer material layer 2 are sheet-like members and are adhere to each other with an adhesive. As shown in FIG. 3, both heat insulation material layer 1 and heat transfer material layer 2 are of a rectangular shape. Heat transfer material layer 2 is smaller in width, compared to heat insulation material layer 1. Then, heat transfer material layer 2 overlaps heat insulation material layer 1 so as to be aligned with each other on both end edges and one side edge of heat insulation material layer 1. That is, heat insulation material layer 1 and heat transfer material layer 2 overlap such that a side portion on the other side of heat insulation material layer 1 protrudes from the other side edge of heat transfer material layer 2.

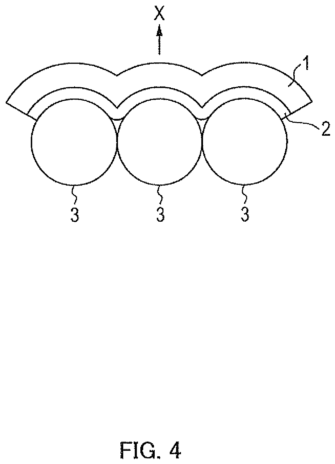

Heat insulation material layer 1 is a sheet having flexibility and heat resistance. The thickness of heat insulation material layer 1 is 3 mm from the viewpoint of coexistence of deformability to allow heat transfer material layer 2 closely contact the surface of, for example, secondary battery 3 (refer to FIG. 4) and sufficient heat insulating properties. Heat insulation material layer 1 can be a fiber sheet made of an organic material or an inorganic material, or a sheet in which aerogel powder is further contained in the above-mentioned sheet.

Heat transfer material layer 2 is a sheet having flexibility and a heat transfer property. The thickness of heat transfer material layer 2 is 0.7 mm from the viewpoint of coexistence of deformability to closely contact the surface of, for example, secondary battery 3 (refer to FIG. 4) and a sufficient heat transfer property. Heat transfer material layer 2 can be a graphite film with the surface subjected to insulation treatment. The graphite film can be a crystalline graphite sheet obtained by polymer graphitization method.

Fig.4 shows an arrangement of the heat insulation member of FIG. 3 when the internal heat source is set to be secondary battery 3. Secondary battery 3 is formed in a columnar shape and three secondary batteries 3 are disposed in parallel with each other. Secondary battery 3 can include: a battery case formed of three pipe-like members made of aluminum which are joined parallel with each other; an insulating layer which covers an inner peripheral wall of each pipe-like member; and an electric cell accommodated in each pipe-like member. Arrow X in FIGS. 4 and. 5 indicates a position where the external heat source is present. The external heat source can be an engine of an automobile or a hard. disk of a computer.

The heat insulation member of FIG. 3 is placed on secondary battery 3 with heat transfer material layer 2 facing the secondary battery 3. The length of the heat insulation member of FIG. 3 is set to a length that covers the surfaces on the X direction side of three secondary batteries 3. In the heat insulation member of FIG. 3, both heat insulation material layer 1 and heat transfer material layer 2 have flexibility. For this reason, the heat insulation member of FIG. 3 is disposed on secondary battery 3 with heat transfer material layer 2 closely contacting the surface on the X direction side of secondary battery 3, as shown in FIG. 4.

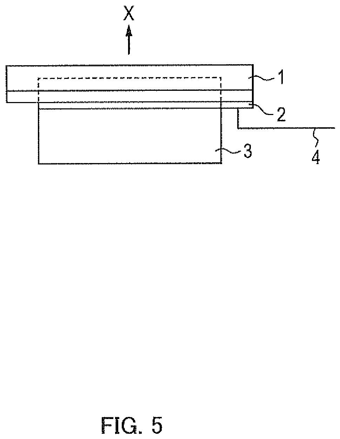

The width of heat transfer material layer 2 is set to be longer than the length of secondary battery 3. For this reason, as shown in FIG. 5, the heat insulation member of FIG. 3 is disposed such that a portion of heat insulation material layer 1 protrudes from one end side of secondary battery 3. The heat insulation member is disposed such that an overlapping portion of heat insulation material layer 1 and heat transfer material layer 2 protrude from the other end side of secondary battery 3,

Heat transfer material 4 such as a copper wire is connected to a portion of heat transfer material layer 2 protruding from the other end of secondary battery 3. Heat transfer material 4 is connected to another heat-transferable member (an external heat dissipation section) having lower temperature, compared to heat transfer material layer 2. The portion of heat transfer material layer 2 protruding from the other end of secondary battery 3 and heat transfer material 4 correspond to the heat dissipation section in the invention. The external heat dissipation section can be appropriately set depending on the surrounding environment of the external heat source. The external heat dissipation section can be a heat dissipation member configuring the automobile, such as a metallic frame, when the external heat source is an engine of an automobile. Further, the external heat dissipation section can be an air blast path of a fan for air-cooling the hard disk or a metallic member in the air blast path, when the external heat source is a hard disk of a computer.

Heat transfer from the external heat source to secondary battery 3 can be cut off by heat insulation material layer 1. When secondary battery 3 operates, secondary battery 3 generates heat. The heat generated in secondary battery 3 is transmitted to the entirety of heat transfer material layer 2. One part of heat from secondary battery 3 to heat transfer material layer 2 is released from the protruding portion of heat transfer material layer 2 into the air, and the other part is released to the external heat dissipation section through heat transfer material 4.

The heat insulation member of FIG. is disposed with heat insulation material layer 1 facing the external heat source and with heat transfer material layer 2 closely contacting the surface facing the external heat source, of the surface of the internal heat source. For this reason, it is possible to cut off heat from the external heat source to the internal heat source and it is possible to release heat generated in the internal heat source to the outside.

Further, the heat insulation member of FIG. 3 is formed by the bonding flexible sheet-like heat insulation material layer 1 on flexible sheet-like heat transfer material layer 2. Compared to a heat insulation material layer formed by a molded product, heat insulation material layer 1 has excellent versatility. Therefore it is possible to more easily obtain the heat insulation member at a lower cost.

Further, heat insulation material layer 1 of the heat insulation member of FIG. 3 contains aerogel powder. For this reason, it is possible to obtain an excellent heat insulation effect to the external heat source.

Further, heat transfer material layer 2 of the heat insulation member of FIG. 3 can be a crystalline graphite sheet. For this reason, it is possible to obtain excellent flexibility and an excellent heat dissipation effect with respect to the internal heat source. In addition, since heat transfer material layer 2 has the surface subjected to insulation treatment, heat transfer material layer 2 has no electric conductivity. Accordingly, it is possible to prevent a short circuit between secondary battery 3 and heat transfer material layer 2.

As the heat dissipation section, the heat insulation member of FIG 5 has: a portion of heat transfer material layer 2 which faces away from the external heat source and which does not contact the surface of secondary battery 3; and heat transfer material 4 connected to the portion. For this reason, the heat generated in secondary battery 3 can be more efficiently released from heat transfer material layer 2 into air, and also released through heat transfer material 4 to the external heat dissipation section.

Alternatively, the heat dissipation section may be composed of the only portion that does not closely contact the surface of secondary battery 3 in heat transfer material layer 2, or may be composed of the only heat transfer material 4 connected to heat transfer material layer 2.

In the heat insulation member of FIG. 5, heat insulation material layer 1 protrudes from both ends of secondary battery 3. It is even more effective from the viewpoint of more reliably cutting off heat from the external heat source to secondary battery 3.

### [Reference Example 2]

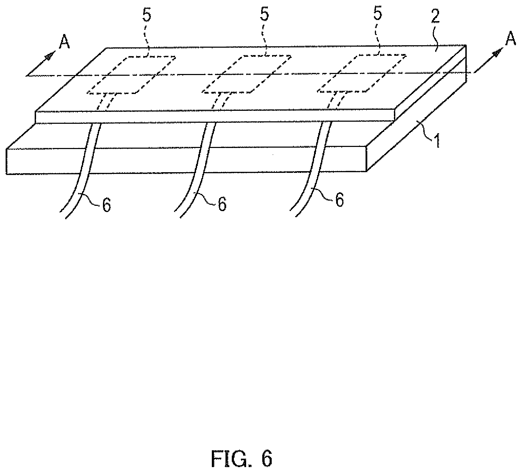

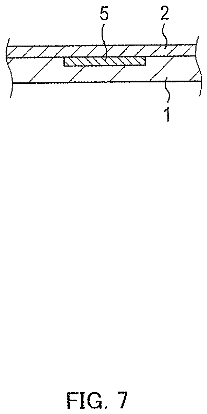

A heat insulation member of FIG. 6 further has heating device 5 in addition to the heat insulation member of FIG. 5. The heat insulation member of FIG. 6 has a plurality of heating devices 5 which is arranged between heat insulation material layer 1 and heat transfer material layer 2 so as to be contacted to heat transfer material layer 2, as shown in FIG. 7. Heating device 5 is disposed between heat insulation material layer 1 and heat transfer material layer 2 so as to be integrally formed with these layers. Conducting wire 6 for supplying electricity to heating device 5 is connected to each of heating devices 5. Heating device 5 is, for example, a sheet heater being deformable and having flexibility. Heating device 5 may be a cord heater.

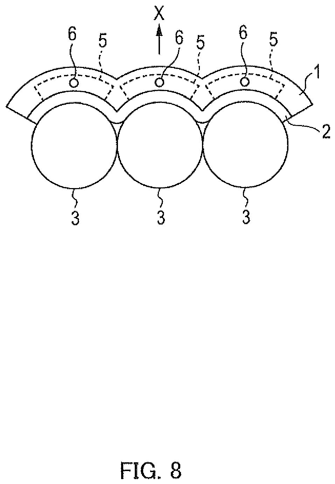

The heat insulation member of FIG. 6 is disposed on secondary battery 3, with heat insulation material layer 1 being arranged at the external heat source side and with heat transfer material layer 2 closely contacting the surface on the X direction side, similar to the heat insulation member of FIG. 3. Heating devices 5 are respectively arranged on secondary batteries 3 in the heat insulation member (FIG. 8), with heat transfer material layer 2 being interposed therebetween.

Heating device 5 operates before or at the time of starting-up of secondary battery 3. Due to heat from heating device 5, secondary battery 3 can be warmed from the beginning of starting-up. Accordingly, it is possible to efficiently operate secondary battery 3 from the starting-up.

In particular, in the heat insulation member of FIG. 6, heating device 5 is arranged on secondary battery 3 with heat transfer material layer 2 being interposed therebetween. Accordingly, the heat from heating device 5 is first transmitted to heat transfer material layer 2. The heat transmitted to heat transfer material layer 2 is further transmitted to a position of secondary battery 3 facing heating device 5, and also spreads to heat transfer material layer 2. The spreading heat to heat transfer material layer 2 is transmitted to secondary battery 3 from the contact surface of secondary battery 3 with heat transfer material layer 2, and also transmitted to other secondary batteries 3. In this way, the heat from heating device 5 is efficiently transmitted to secondary battery 3.

### [Reference Example 3]

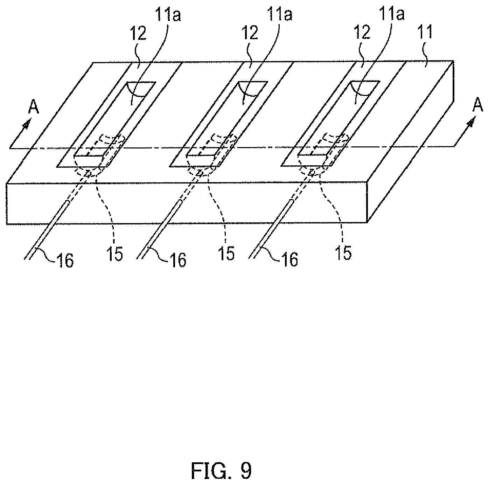

A heat insulation member of FIG. 9 has: heat insulation material layer 11 having a plurality of depressions 11a; heating device 15 disposed at a bottom portion of depression 11a; heat transfer material layer 12 closely contacting the surface of depression 11a and the surface of heat insulation material layer 11 around depression 11a; and conducting wire 16 passing through heat insulation material layer 11 so as to be connected to heating device 15. Heat insulation material layer 11 can be formed by molding or drilling processing of a foam body having heat resisting properties.

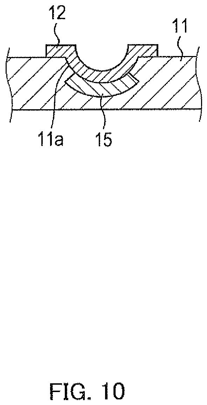

Depression 11a is formed in a semi-columnar shape. Then, depressions 11a are disposed parallel to each other in heat insulation material layer 11, as shown in FIG. 9. Heating device 15 is disposed on the bottom at one end portion of depression 11a and constitutes a portion of the semi-columnar bottom portion of depression 11 a, as shown in FIG. 10. Heat transfer material layer 12 is disposed at each depression 11a and around depression 11a. In addition, heat transfer material layer 12 extends to the other end of heat insulation material layer 11 along an axial direction of depression 11a.

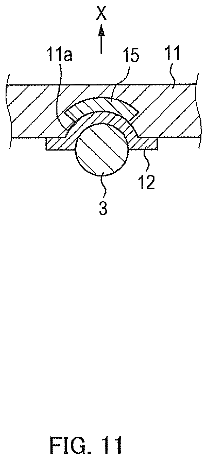

In the heat insulation member of FIG. 9, secondary battery 3 as the internal heat source is fitted in each depression 11a. The heat insulation member of FIG. 9 is arranged with depression 11a of heat insulation material layer 11 being oriented in the X direction such that heat insulation material layer 11 faces an external heat source, as shown in FIG. 11. Since secondary battery 3 has a columnar shape, secondary battery 3 can closely contact heat transfer material layer 12 in depression 11a. Heat transfer material layer 12 around depression 11 a corresponds to the heat dissipation section. Heating device 15 is arranged on secondary battery 3 with heat transfer material layer 12 being interposed therebetween. Similar to heating device 5, heating device 15 can comprise a sheet heater or a cord heater.

The heat insulation member of FIG 9 also exhibits the same effects as in the heat insulation member of FIG. 6.

In addition, when heat insulation material layer 11 has flexibility, the surface of depression 11a is easily deformed in conformity to the surface of the internal heat source which is fitted in depression 11a. For this reason, even if the surface shape of the internal heat source and the shape of depression 11a are different from each other, heat transfer material layer 12 in depression 11a can closely contact the surface of the internal heat source fitted in depression 11a. Accordingly, if the internal heat source fits the size of depression 11a, it is possible to apply the heat insulation member of FIG. 9 regardless of the shape of the internal heat source.

### [Example 4 for Explanatory Purposes]

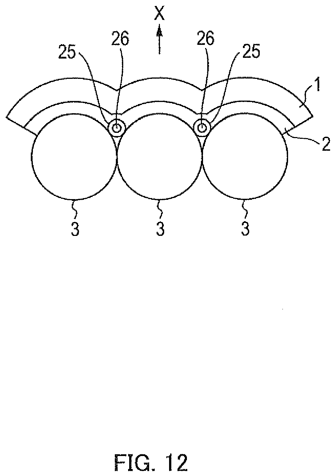

A heat insulation member of FIG. 12 can be configured in the same manner as the heat insulation member of FIG. 3. Heating device 25 is disposed in a depression between secondary batteries 3 and arranged on the surface on the X direction side of secondary battery 3. The heat insulation member of FIG. 12 is disposed with heat insulation material layer 1. being oriented in the X direction and with heat transfer material layer 2 closely contacting the surface on the X direction side of secondary battery 3. Heat transfer material layer 2 closely contacts the surface of secondary battery 3 and also closely contacts the surface of heating device 25.

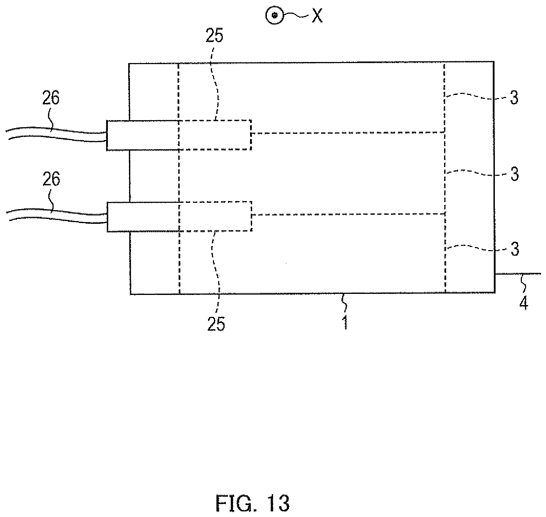

Heating device 25 is a rod-shaped heater (a cartridge heater). Heating device 25 is disposed at one end of the depression between secondary batteries 3, as shown in FIG. 13. Conducting wire 26 is connected to each heating device 25.

When an adhesive layer is formed at least a portion of the surface of heat transfer material layer 2, heat transfer material layer 2 can be adhered to the surface of secondary battery 3 and to the surface of heating device 25 so as to integrate the heat insulation member, secondary battery 3 and heating device 25. The adhesive layer can be formed, for example, by application of an adhesive to heat transfer material layer 2 or by sticking of a double-sided tape.

In this embodiment, heating device 25 directly contacts the surface of secondary battery 3 and also directly contacts the surface of heat transfer material layer 2. For this reason, both secondary battery 3 and heat transfer material layer 2 can be heated by heating device 25.

Further, in this embodiment, it is possible to dispose heating device 25 according to configuration of an internal heat source. For this reason, compared to the heat insulation member of FIG. 6, it is possible to easily make the heating device dispose depending on various forms of internal heat sources. In addition, heating device 25 can be a sheet heater, a cord heater, or the cartridge heater.

### [Reference Example 5]

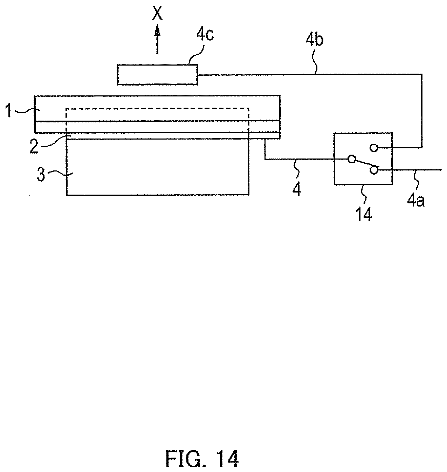

A heat insulation member of FIG. 14 is configured in the same manner as the heat insulation member of FIG. 3 except that the heat from an external heat source can be freely introduced to heat transfer material 4.

In addition to the configuration of the heat insulation member of FIG. 3, the heat insulation member of FIG. 14 has: heat transfer material 4a connected to an external heat dissipation section; heat receiving plate 4c for receiving the heat from the external heat source; heat transfer material 4b connected to heat receiving plate 4c; and switch 14 for arbitrarily connecting heat transfer material 4 connected to heat transfer material layer 2 with heat transfer material 4a or heat transfer material 4b.

Heat receiving plate 4c is disposed on the X direction side of the heat insulation member. Heat receiving plate 4c is disposed to be spaced apart from the heat insulation member. Heat receiving plate 4c receives the heat from the external heat source, which should be cut off to secondary battery 3.

Before or at the time of starting-up of secondary battery 3, heat transfer material 4 and heat transfer material 4b are connected by switch 14. Due to this connection, the heat from the external heat source is transmitted to secondary battery 3 through heat receiving plate 4c, heat transfer material 4b, heat transfer material 4 and heat transfer material layer 2. And thus secondary battery 3 is warmed. Due to this heating of secondary battery 3, secondary battery 3 efficiently operates from the starting-up thereof.

When releasing the heat from secondary battery 3, connection between heat transfer material 4 and 4b is cut by switch 14 so as to connect heat transfer material 4 with heat transfer material 4a. Due to this connection, the heat from secondary battery 3 is released to the outside through heat transfer material layer 2, heat transfer material 4 and heat transfer material 4a.

In this embodiment, the external heat source can be used in place of a heating device. For this reason, it is possible to use the heat from the external heat source for smooth and quick starting-up of the internal heat source.

### Industrial Applicability

Electronic equipment is used in various fields. In general, the electronic equipment generates heat due to an operation and is easily deteriorated under high-temperature environment. Further, from the viewpoint of an environmental problem in recent years, effective use of heat is required. The heat insulation member according to the invention can satisfy both the heat insulation at one side of the member and the heat dissipation at another side of the member. For this reason, according to the invention, in a field using the electronic equipment or a field in which effective use of heat is required, additional improvement in a heat insulation member or development of a new use of a heat insulation member is expected.

### Reference Signs List

- 1, 11, 34: Heat insulation material layer
- 2, 12, 32: Heat transfer material layer
- 3, 31: Secondary battery
- 4, 4a, 4b: Heat transfer material
- 4c: Heat receiving plate
- 5, 15, 25, 35: Heating device
- 6, 16, 26: Conducting wire
- 11a: Depression
- 14: Switch
- 30: Secondary battery unit
- 40: External heat dissipation section
- 45: Heat source unit
- X: Arrow indicating a direction in which an external heat source is present

## Claims

1. A heat source unit (45) containing a heat source (H) and a secondary battery unit (30) therein,
wherein the heat source (H) is located outside of the secondary battery unit (30);
wherein the secondary battery unit (30) comprises
a secondary battery (3,31);
a heat transfer material layer (2, 12, 32) having a sheet shape disposed so as to contact an outer periphery of the secondary battery (3, 31);
a heat insulation material layer (1, 11, 34) having a sheet shape that is arranged at outer peripheries of the heat transfer material layer (2, 12, 32) and a heating device (5, 15, 35), the heat insulation material layer (1, 11, 34) having a lower thermal conductivity and a shorter length than the heat transfer material layer (2, 12, 32);
a heat dissipation section (33) contacting the heat transfer material layer (2, 12, 32) and an external heat dissipation section (40) of the heat source unit (45), the heat dissipation section (33) releasing heat from the secondary battery (3, 31) to an outside of the heat source unit (45), and
the heating device (5, 15, 35) is arranged between the heat transfer material layer (2, 12, 32) and the heat insulation material layer (1, 11, 34), the heating device (5, 15, 35) being configured to heat the secondary battery (3, 31);
**characterized in that**
the secondary battery unit (30) is configured for cutting off heat transfer from the heat source (H) to the secondary battery;
the heat transfer material layer (2, 12, 32) has a thickness of 0.025 to 10 mm; the heat insulation material layer (1, 11, 34) has a thickness of 0.1 to 10mm; and
the heat insulation material layer (1, 11, 34) faces the heat source (H).

2. The heat source unit (45) according to claim 1, wherein the heat insulation material layer (1, 11, 34) is absent between the heat dissipation section (33) and the external heat dissipation section (40).

3. The heat source unit (45) according to claim 1, wherein the heat dissipation section (33) and the external heat dissipation section (40) are respectively formed of separate members.

4. The heat source unit (45) according to claim 1, wherein the external heat dissipation section (40) is exposed to air outside the heat source unit (45).

5. The heat source unit (45) according to claim 1, wherein the heat transfer material layer (2, 12, 32) covers a side surface of the secondary battery (3, 31).

6. The heat source unit (45) according to claim 1, wherein at least one of the heat insulation material layer (1, 11, 34) and the heat transfer material layer (2, 12, 32) has flexibility.

7. The heat source unit (45) according to claim 1, wherein the heat insulation material layer (1, 11, 34) contains aerogel.

8. The heat source unit (45) according to claim 1, wherein the heat transfer material layer (2, 12, 32) contains crystalline graphite.

9. The heat source unit (45) according to claim 1, wherein the external heat dissipation section (40) is a water-cooled tube.

10. The heat source unit (45) according to claim 1, wherein:
the secondary battery unit (30) is a car-mounted secondary battery unit;
the heat source (H) is an engine; and
the heat dissipation section (33) contacts a car body as the external heat dissipation section (40).

11. The heat source unit (45) according to claim 1, wherein the secondary battery unit (30) is a household secondary battery unit.

## Patentansprüche

1. Wärmequelleneinheit (45), die eine Wärmequelle (H) und eine Sekundärbatterieeinheit (30) umfasst,
wobei sich die Wärmequelle (H) außerhalb der Sekundärbatterieeinheit (30) befindet;
wobei die Sekundärbatterieeinheit (30) Folgendes umfasst:
eine Sekundärbatterie (3, 31);
eine Lage (2, 12, 32) aus wärmeübertragendem Material, die eine Folienform aufweist, die so angeordnet ist, dass sie mit einem Außenumfang der Sekundärbatterie (3, 31) in Kontakt ist;
eine Lage (1, 11, 34) aus wärmeisolierendem Material, die eine Folienform aufweist, die an Außenumfangsseiten der Lage (2, 12, 32) aus wärmeübertragendem Material angeordnet ist; und
eine Heizvorrichtung (5, 15, 35), wobei die Lage (1, 11, 34) aus wärmeisolierendem Material eine niedrigere Wärmeleitfähigkeit und eine kürzere Länge als die Lage (2, 12, 32) aus wärmeübertragendem Material aufweist;
einen Wärmeabgabeabschnitt (33), der mit der Lage (2, 12, 32) aus wärmeübertragendem Material und einem außen liegenden Wärmeabgabeabschnitt (40) der Wärmequelleneinheit (45) in Kontakt ist, wobei der Wärmeabgabeabschnitt (33) Wärme von der Sekundärbatterie (3, 31) zu einer Außenseite der Wärmequelleneinheit (45) abgibt, und
die Heizvorrichtung (5, 15, 35) zwischen der Lage (2, 12, 32) aus wärmeübertragendem Material und der Lage (1, 11, 34) aus wärmeisolierendem Material angeordnet ist, wobei die Heizvorrichtung (5, 15, 35) konfiguriert ist, die Sekundärbatterie (3, 31) zu erwärmen;
**dadurch gekennzeichnet, dass**
die Sekundärbatterieeinheit (30) konfiguriert ist, eine Wärmeübertragung von der Wärmequelle (H) an die Sekundärbatterie abzuschirmen;
die Lage (2, 12, 32) aus wärmeübertragendem Material eine Dicke im Bereich zwischen 0,025 und 10 mm hat;
die Lage (1, 11, 34) aus wärmeisolierendem Material eine Dicke im Bereich von 0,1 bis 10 mm hat; und
die Lage (1, 11, 34) aus wärmeisolierendem Material der Wärmequelle (H) zugewandt ist.

2. Wärmequelleneinheit (45) nach Anspruch 1, wobei die Lage (1, 11, 34) aus wärmeisolierendem Material zwischen dem Wärmeabgabeabschnitt (33) und dem außen liegenden Wärmeabgabeabschnitt (40) fehlt.

3. Wärmequelleneinheit (45) nach Anspruch 1, wobei der Wärmeabgabeabschnitt (33) und der außen liegende Wärmeabgabeabschnitt (40) jeweils aus getrennten Elementen gebildet sind.

4. Wärmequelleneinheit (45) nach Anspruch 1, wobei der außen liegende Wärmeabgabeabschnitt (40) außerhalb der Wärmequelleneinheit (45) Luft ausgesetzt ist.

5. Wärmequelleneinheit (45) nach Anspruch 1, wobei die Lage (2, 12, 32) aus wärmeübertragendem Material eine Seitenfläche der Sekundärbatterie (3, 31) bedeckt.

6. Wärmequelleneinheit (45) nach Anspruch 1, wobei die Lage (1, 11, 34) aus wärmeisolierendem Material bzw. die Lage (2, 12, 32) aus wärmeübertragendem Material biegsam ist.

7. Wärmequelleneinheit (45) nach Anspruch 1, wobei die Lage (1, 11, 34) aus wärmeisolierendem Material Aerogel enthält.

8. Wärmequelleneinheit (45) nach Anspruch 1, wobei die Lage (2, 12, 32) aus wärmeübertragendem Material kristallinen Graphit aufweist.

9. Wärmequelleneinheit (45) nach Anspruch 1, wobei der außen liegende Wärmeabgabeabschnitt (40) ein wassergekühltes Rohr ist.

10. Wärmequelleneinheit (45) nach Anspruch 1, wobei:
die Sekundärbatterieeinheit (30) eine Sekundärbatterieeinheit ist, die in einem Fahrzeug angebracht ist;
die Wärmequelle (H) ein Motor ist; und
der Wärmeabgabeabschnitt (33) mit einer Fahrzeugkarosserie als der außen liegende Wärmeabgabeabschnitt (40) in Kontakt ist.

11. Wärmequelleneinheit (45) nach Anspruch 1, wobei die Sekundärbatterieeinheit (30) eine Haushalts-Sekundärbatterieeinheit ist.

## Revendications

1. Unité de source de chaleur (45) contenant une source de chaleur (H) et une unité de batterie secondaire (30),
où la source de chaleur (H) est située à l'extérieur de l'unité de batterie secondaire (30);
où l'unité de batterie secondaire (30) comprend
une batterie secondaire (3, 31) ;
une couche de matériau de transfert de chaleur (2, 12, 32) en forme de feuille disposée de manière à être en contact avec une périphérie extérieure de la batterie secondaire (3, 31) ;
une couche de matériau d'isolation thermique (1, 11, 34) en forme de feuille qui est agencée au niveau de périphéries extérieures de la couche de matériau de transfert de chaleur (2, 12, 32) et d'un dispositif de chauffage (5, 15, 35), la couche de matériau d'isolation thermique (1, 11, 34) ayant une conductivité thermique inférieure à et une longueur plus courte que celles de la couche de matériau de transfert de chaleur (2, 12, 32) ;
une section de dissipation de chaleur (33) en contact avec la couche de matériau de transfert de chaleur (2, 12, 32) et une section de dissipation de chaleur extérieure (40) de l'unité de source de chaleur (45), la section de dissipation de chaleur (33) dissipant la chaleur de la batterie secondaire (3, 31) vers l'extérieur de l'unité de source de chaleur (45), et
le dispositif de chauffage (5, 15, 35) est agencé entre la couche de matériau de transfert de chaleur (2, 12, 32) et la couche de matériau d'isolation thermique (1, 11, 34), le dispositif de chauffage (5, 15, 35) étant conçu pour chauffer la batterie secondaire (3, 31) ;
**caractérisée en ce que**
l'unité de batterie secondaire (30) est conçue pour interrompre un transfert de chaleur de la source de chaleur (H) à la batterie secondaire ;
la couche de matériau de transfert de chaleur (2, 12, 32) a une épaisseur de 0,025 à 10 mm;
la couche de matériau d'isolation thermique (1, 11, 34) a une épaisseur de 0,1 à 10 mm ; et
la couche de matériau d'isolation thermique (1, 11, 34) fait face à la source de chaleur (H).

2. Unité de source de chaleur (45) selon la revendication 1, où la couche de matériau d'isolation thermique (1, 11, 45) est absente entre la section de dissipation de chaleur (33) et la section de dissipation de chaleur extérieure (40)

3. Unité de source de chaleur (45) selon la revendication 1, où la section de dissipation de chaleur (33) et la section de dissipation de chaleur extérieure (40) sont respectivement formées d'organes séparés.

4. Unité de source de chaleur (45) selon la revendication 1, où la section de dissipation de chaleur extérieure (40) est exposée à l'air extérieur à l'unité de source de chaleur (45).

5. Unité de source de chaleur (45) selon la revendication 1, où la couche de matériau de transfert thermique (2, 12, 32) recouvre une surface latérale de la batterie secondaire (3, 31).

6. Unité de source de chaleur (45) selon la revendication 1, où au moins une des couches que sont la couche de matériau d'isolation thermique (1, 11, 34) et la couche de matériau de transfert de chaleur (2, 12, 32) est flexible.

7. Unité de source de chaleur (45) selon la revendication 1, où la couche de matériau de transfert de chaleur (1, 11, 34) contient un aérogel.

8. Unité de source de chaleur (45) selon la revendication 1, où la couche de matériau de transfert de chaleur (2, 12, 32) contient du graphite cristallin.

9. Unité de source de chaleur (45) selon la revendication 1, où la section de dissipation de chaleur extérieure (40) est un tube refroidi à l'eau.

10. Unité de source de chaleur (45) selon la revendication 1, où :
l'unité de batterie secondaire (30) est une unité de batterie secondaire montée dans une voiture ;
la source de chaleur (H) est un moteur ; et
la section de dissipation de chaleur (33) est en contact avec un châssis de voiture servant de section de dissipation de chaleur extérieure (40).

11. Unité de source de chaleur (45) selon la revendication 1, où l'unité de batterie secondaire (30) est une unité de batterie secondaire domestique.
